# EUROPEAN PATENT APPLICATION

(11) **EP 4 528 987 A1**
(43) Date of publication of application: **26.03.2025**
(21) Application number: 24186498.2
(22) Date of filing: 04.07.2024
(51) Int. Cl.: H02K 1/16, H02K 1/278, H02K 21/14, H02K 3/48, H02K 3/47

(54) **ROTATING ELECTRIC MACHINE**

(30) Priority: 20.09.2023 JP 2023154006
(71) Applicant: Kabushiki Kaisha Toshiba, Tokyo 105-0023 (JP)
(72) Inventor: KINOUCHI, Hiroaki, Minato-ku, Tokyo (JP); HAGIWARA, Masaya, Minato-ku, Tokyo (JP); SAKURADA, Shinya, Minato-ku, Tokyo (JP)
(74) Representative: Hoffmann Eitle

(57) **Abstract**

In one embodiment, a rotating electric machine includes a rotor and a stator. The rotor is a rotor which is rotatable around a center axis. The stator surrounds the rotor from one radial side. The stator includes a back yoke, a coil unit, and a plurality of partition units. The back yoke has an annular shape centered on the center axis. The coil unit is disposed on the other radial side of the back yoke. The plurality of partition units partition a winding range in which the coil unit is disposed in a circumferential direction. Each of the partition units includes a magnetic body portion made of a magnetic material. A circumferential dimension of the magnetic body portion is less than a circumferential dimension of the winding range. A radial dimension of the magnetic body portion is 1/2 or more of a radial dimension of the coil unit.

## Description

### BACKGROUND

### Field

Embodiments described herein relate generally to a rotating electric machine.

### Related Art

With the recent increasing awareness of environmental considerations, an aircraft having a propulsion fan driven by a rotating electric machine is being developed. The rotating electric machine for aircraft is required to be lightweight and be rotated at high speed. As the rotating electric machine to ensure light weight, a stator configured by combining at least a coil with an annular back yoke is known. In such a rotating electric machine, copper loss is likely to occur as magnetic flux passes through conductors of the coils. Particularly, in the rotating electric machine that rotates at high speed, there is a problem in that the copper loss becomes significant and the energy efficiency of the rotating electric machine decreases.

### [Patent Documents]

[Patent Document 1] Japanese Unexamined Patent Application, First Publication No. 2020-018132

### BRIEF DESCRIPTION OF THE DRAWINGS

FIG. 1 is a cross-sectional view of a rotating electric machine according to a first embodiment.
FIG. 2 is a perspective view of a magnet of the rotating electric machine according to the first embodiment.
FIG. 3 is a schematic cross-sectional view of a stator of the rotating electric machine according to the first embodiment.
FIG. 4 is a graph showing a relationship between drive efficiency and a ratio of a radial dimension of a magnetic body portion with respect to a radial dimension of a winding range in the rotating electric machine according to the first embodiment.
FIG. 5 is a schematic cross-sectional view of a stator according to a second embodiment.
FIG. 6 is a perspective view of a magnet according to a modified example.
FIG. 7 is a schematic view showing a configuration example of an aircraft.

### DETAILED DESCRIPTION

Hereinafter, rotating electric machines of embodiments will be described with reference to the drawings.

The design of the rotating electric machines can be changed as appropriate to suit specifications and the like. Therefore, the shape and the like of each member included in the rotating electric machine can be changed arbitrarily, and the shape, number, and the like in the drawings are merely examples.

A rotating electric machine that is lightweight and can improve energy efficiency during high-speed rotation.

In some embodiments, a rotating electric machine includes a rotor and a stator. The rotor is rotatable around a center axis. The stator surrounds the rotor from one radial side. The stator includes a back yoke, a coil unit, and a plurality of partition units. The back yoke has an annular shape centered on the center axis. The coil unit is disposed on the other radial side of the back yoke. The plurality of partition units partition a winding range in which the coil unit is disposed in a circumferential direction. Each of the plurality of partition units includes a magnetic body portion made of a magnetic material. A ratio of a circumferential dimension of the magnetic body portion with respect to a circumferential dimension of the winding range is less than 1. A ratio of a radial dimension of the magnetic body portion with respect to a radial dimension of the winding range is 1/2 or more.

### (First embodiment)

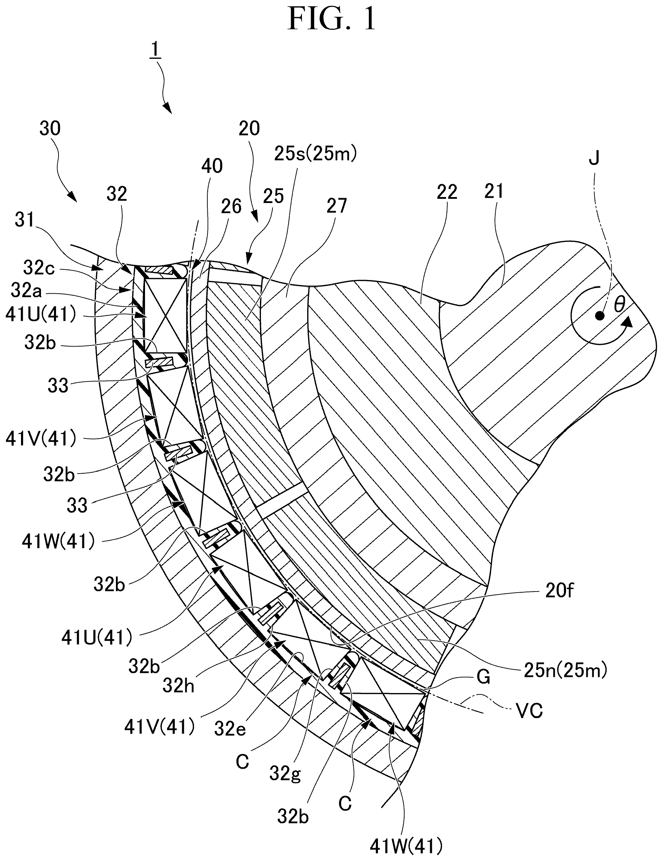

FIG. 1 is a cross-sectional view of a rotating electric machine 1 of this embodiment.

As shown in FIG. 1, the rotating electric machine 1 includes a rotor 20 and a stator 30. In the following description, the direction parallel to a center axis J is simply referred to as the "axial direction", the radial direction centered on the center axis J is simply referred to as the "radial direction", and the circumferential direction centered on the center axis J is simply referred to as the "circumferential direction". Further, the direction away from the center axis J in the radial direction is referred to as the "radially outside" or "one radial side", and the direction closer to the center axis J in the radial direction is referred to as the "radially inside" or the "other radial side" in some cases. In addition, in each figure, the circumferential direction θ around the center axis J is illustrated as necessary. In each figure, the direction in which the arrow in the circumferential direction θ points is referred to as "one circumferential side (+θ)" and the opposite direction is referred to as the "other circumferential side (-θ)" in some cases.

The rotating electric machine 1 according to this embodiment is an inner rotor type rotating electric machine in which the rotor 20 is disposed radially inside the stator 30. However, the rotating electric machine may be an outer rotor type in which the rotor is disposed radially outside the stator. In this case, each part of the rotor has a configuration in which one side and the other side in the radial direction are reversed.

The rotor 20 is rotatable around the center axis J. The rotor 20 includes a shaft 21 which has the center axis J, a hub member 22, a rotor core 27, a magnet unit 25, and a cover 26.

The shaft 21 extends along the center axis J. The shaft 21 of the rotating electric machine 1 according to this embodiment has, for example, a columnar shape extending in the axial direction. The shaft 21 is supported by a bearing (not shown) to be rotatable around the center axis J.

The hub member 22 has, for example, a cylindrical shape with a sufficient thickness in the radial direction. The hub member 22 can be fixed to the outer peripheral surface of the shaft 21. Further, the rotor core 27 can be fixed to the outer peripheral surface of the hub member 22. Furthermore, the hub member 22 may be provided with a plurality of holes penetrating in the axial direction.

The rotor core 27 is made of a magnetic material. The rotor core 27 is, for example, a laminated steel plate formed by laminating a plurality of electromagnetic steel plates in the axial direction. The rotor core 27 of the rotating electric machine 1 according to this embodiment has, for example, a cylindrical shape. The magnet unit 25 is disposed on the outer peripheral surface of the rotor core 27.

The magnet unit 25 has, for example, an annular shape. The magnet unit 25 can be fixed to the outer peripheral surface of the rotor core 27 by, for example, bonding means such as adhesive. The rotor 20 of the rotating electric machine 1 according to this embodiment is a surface permanent magnetic type in which the magnet unit 25 magnetically directly faces the stator 30. However, the configuration of the rotor 20 is not limited to this embodiment and may be, for example, an embedded magnet type.

The magnet unit 25 includes a plurality of first magnets 25s and a plurality of second magnets 25n. The plurality of first magnets 25s and the plurality of second magnets 25n are alternately arranged in the circumferential direction. The plurality of first magnets 25s and the plurality of second magnets 25n have magnetization directions opposite to each other in the radial direction. The plurality of first magnets 25s are a plurality of magnets which form a plurality of S poles on the radially outside and the plurality of second magnets 25n are a plurality of magnets which form a plurality of N poles on the radially outside. Hereinafter, when the plurality of first magnets 25s and the plurality of second magnets 25n are not distinguished from each other, they will simply be referred to as a plurality of magnets 25m. That is, the magnet unit 25 includes the plurality of magnets 25m of which magnetization directions alternate in the circumferential direction.

Each of the plurality of magnets 25m of the rotating electric machine 1 according to this embodiment extends, for example, in an arc shape centered on the center axis J when viewed from the axial direction. Further, each of the plurality of magnets 25m has a plate shape with the radial direction as the thickness direction. The inner surface of each of the plurality of magnets 25m facing the radially inside is adhesively fixed to the outer surface of the rotor core 27. Further, the outer surface of each of the plurality of magnets 25m facing the radially outside is covered with the tubular cover 26. The cover 26 surrounds the magnet unit 25 and suppresses the plurality of magnets 25m from separating from the rotor core 27. The cover 26 is made of a material that does not easily affect the magnetic force of the magnet unit 25.

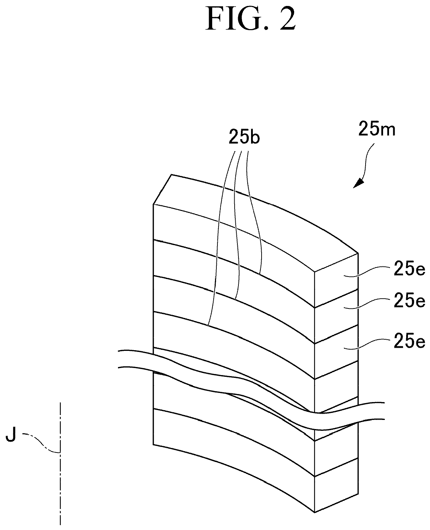

FIG. 2 is a perspective view of the magnet 25m of the rotating electric machine according to this embodiment. As shown in FIG. 2, each of the plurality of magnets 25m of the rotating electric machine 1 according to this embodiment may be a divided magnet. In the case of the divided magnet, each of the plurality of magnets 25m includes a plurality of element magnets 25e stacked in the axial direction. The plurality of element magnets 25e are, for example, sintered magnets. In the example shown in FIG. 2, the plurality of element magnets 25e arranged in the axial direction are bonded to each other via an adhesive layer 25b. The magnetization directions of the plurality of stacked element magnets 25e are radial and coincide with each other. In the example shown in FIG. 2, the plurality of element magnets 25e are magnetized after being bonded to each other via the adhesive layer 25b.

According to the plurality of magnets 25m of the rotating electric machine 1 of this embodiment, each of the plurality of magnets is formed by bonding the plurality of element magnets 25e. Therefore, the value of the eddy current flowing through each of the plurality of element magnets 25e can be reduced and the eddy current loss occurring in each of the plurality of magnets 25m as a whole can be reduced compared to the case where the magnet is composed of one sintered magnet. Accordingly, heat generation in the plurality of magnets 25m due to eddy currents generated in the plurality of magnets 25m can be suppressed, a decrease in the magnetic force of the plurality of magnets 25m can be reduced, and the torque performance of the rotating electric machine 1 can be improved.

In this embodiment, it is preferable that the adhesive layer 25b that bonds the plurality of element magnets 25e is made of an insulating material. In this case, it is possible to suppress the current flow between the plurality of element magnets 25e to be bonded to each other and to effectively suppress the eddy current loss of the magnets 25m. For example, the plurality of element magnets 25e may be insulated from each other by forming an insulating film on the surface of the plurality of element magnets 25e.

In this embodiment, the plurality of element magnets 25e are preferably composed of a plurality of samarium cobalt magnets. That is, the plurality of magnets 25m of the rotating electric machine 1 according to this embodiment are preferably a plurality of samarium cobalt magnets. Samarium cobalt magnets are superior in heat resistance, as compared to other common rare earth magnets such as neodymium magnets, and are known to maintain high magnetic properties even at high temperatures of 150°C or higher. When the rotating electric machine 1 according to this embodiment is mounted on an aircraft 90, it is required to be small and lightweight. Therefore, it is difficult to adopt a cooling structure and a heat dissipation structure for the rotating electric machine 1. According to this embodiment, since the samarium cobalt magnets are adopted as the plurality of magnets 25m, it is possible to configure the rotating electric machine 1 that exhibits sufficient torque performance even when the plurality of magnets 25m reach a high temperature. As a result, the cooling structure and heat dissipation structure of the rotating electric machine 1 can be simplified.

As shown in FIG. 1, the stator 30 of the rotating electric machine 1 according to this embodiment surrounds the rotor 20 from the radially outside. The stator 30 includes a back yoke 31, a guide member 32, and a coil unit 40.

The back yoke 31 has, for example, an annular shape centered on the center axis J. The back yoke 31 is made of a magnetic material. The back yoke 31 is, for example, a laminated steel plate formed by laminating a plurality of electromagnetic steel plates in the axial direction. A magnetic circuit for rotating the rotor 20 passes through the back yoke 31. The inner peripheral surface of the back yoke 31 of the rotating electric machine 1 according to this embodiment is a cylindrical surface centered on the center axis J and does not include unevenness. That is, the back yoke 31 of the rotating electric machine 1 according to this embodiment does not have a general teeth structure.

The guide member 32 includes, for example, a resin portion 32c made of an insulating resin and a plurality of magnetic body portions 33 made of a magnetic material. The guide member 32 can be manufactured, for example, by insert-molding in which the plurality of magnetic body portions 33 are embedded in the resin portion 32c.

The guide member 32 includes, for example, an annular portion 32a and a plurality of partition units 32b. The annular portion 32a has, for example, a cylindrical shape centered on the center axis J. The outer peripheral surface of the annular portion 32a can be fixed to the inner peripheral surface of the back yoke 31 by, for example, bonding means such as adhesive. The annular portion 32a is entirely composed of the resin portion 32c. The annular portion 32a is disposed between the back yoke 31 and the coil unit 40. The annular portion 32a insulates the back yoke 31 and the coil unit 40 from each other.

The plurality of partition units 32b protrude radially inward from an inner peripheral surface 32e of the annular portion 32a. Each of the plurality of partition units 32b has a rib shape that protrudes in the radial direction and extends in the axial direction. The plurality of partition units 32b are arranged at equal intervals in the circumferential direction. A winding range C for arranging the coil unit 40 is provided between the plurality of partition units 32b which are adjacent to each other in the circumferential direction. That is, the plurality of partition units 32b partition the winding range C. The stator 30 of the rotating electric machine 1 according to this embodiment is provided with the same number of winding ranges C as the plurality of partition units 32b. The winding range C of the rotating electric machine 1 according to this embodiment has a flat rectangular shape that is larger in the circumferential direction than in the radial direction. Accordingly, the coil unit 40 disposed in the winding range C can be made thinner in the radial direction, and as a result, the rotating electric machine 1 can be made smaller in the radial direction. Furthermore, the configurations of the plurality of partition units 32b and the winding range C are not limited to this embodiment.

In the present specification, the "winding range C" means a range in which the coil unit 40 can be disposed. As will be described later, since the coil unit 40 is composed of a plurality of wires 42e, it is difficult to determine the shape of the coil unit 40 in a fixed shape. The winding range C is a region where the irregularly shaped coil unit 40 can be disposed and is defined as described below.

In this embodiment, the winding range C is a range between the adjacent partition units 32b of the plurality of partition units 32b in the circumferential direction. Thus, the winding range C is provided between a surface 32g facing the other circumferential side (-θ) of the partition unit 32b located on one circumferential side (+θ) and a surface 32h facing one circumferential side (+θ) of the partition unit 32b located on the other circumferential side (-θ) in the adjacent partition units 32b in the circumferential direction.

In this embodiment, the winding range C is a range between the rotor 20 and the annular portion 32a in the radial direction. Further, an air gap G for avoiding the contact with the stator 30 is provided on the radially outside of the rotor 20. Therefore, the winding range C is provided between a virtual circle VC offset radially outward by the size of the air gap G with respect to an outer peripheral surface 20f of the rotor 20 and an inner peripheral surface 32e of the annular portion 32a. The virtual circle VC passes through the radially inner end of the coil unit 40. Thus, the radial dimension of the winding range C can be the distance from the inner peripheral surface 32e of the annular portion 32a to the radially inner end of the coil unit 40.

The plurality of magnetic body portions 33 are embedded in the resin portion 32c of the partition units 32b. That is, the partition units 32b of the rotating electric machine 1 according to this embodiment include the plurality of magnetic body portions 33 and the resin portion 32c which covers the outer surface of the plurality of magnetic body portions 33. The resin portion 32c which covers the plurality of magnetic body portions 33 insulates the plurality of magnetic body portions 33 and the coil unit 40 from each other. Further, in this embodiment, a part of the resin portion 32c is interposed between the plurality of magnetic body portions 33 and the back yoke 31 to suppress the contact between the plurality of magnetic body portions 33 and the back yoke 31. However, the plurality of magnetic body portions 33 may contact the inner peripheral surface of the back yoke 31 at an end surface facing the radially outside or the plurality of magnetic body portions 33 and the back yoke 31 may be integrally formed.

The plurality of magnetic body portions 33 of the rotating electric machine 1 according to this embodiment have, for example, a prismatic shape extending in the axial direction. The plurality of magnetic body portions 33 of the rotating electric machine 1 according to this embodiment have a rectangular shape when viewed from the axial direction. The plurality of magnetic body portions 33 are, for example, laminated steel plates formed by laminating a plurality of electromagnetic steel plates in the axial direction. The plurality of magnetic body portions 33 allow magnetic flux to pass through in a concentrated manner between the winding ranges C arranged in the circumferential direction. The action of the plurality of magnetic body portions 33 will be described in detail later. Furthermore, the shape of the plurality of magnetic body portions 33 are not limited to this embodiment. The plurality of magnetic body portions 33 may have any shape, for example, a shape in which a circumferential or radial end surface is curved. Further, the plurality of magnetic body portions 33 may have mutually different shapes. That is, each of the plurality of magnetic body portions 33 may have an irregular shape.

The coil unit 40 is disposed radially inside the back yoke 31 via the annular portion 32a. The coil unit 40 includes a plurality of (three in this embodiment) phase coils 41. Here, in order to illustrate and describe a three-phase AC rotating electric machine, the number of phase coils 41 is assumed to be three, but the number of phase coils 41 is not limited to this embodiment. The coil unit 40 in FIG. 1 is configured by distributed winding in which phase coils 41 of different phases overlap in the radial direction while being shifted in the circumferential direction. Alternating currents with different phases flow through each phase coil 41. In the example shown in FIG. 1, alternating currents of which phases are shifted by 120° are passed through the three-phase coils 41. Furthermore, the phase difference between the alternating currents flowing through the phase coils 41 is changed as appropriate depending on the number of phase coils 41. In the following description, when distinguishing the plurality of phase coils 41 from each other, they are referred to as a U-phase coil 41U, a V-phase coil 41V, and a W-phase coil 41W.

The U-phase coil 41U, the V-phase coil 41V, and the W-phase coil 41W are arranged in different winding ranges C. That is, only a plurality of phase coils 41 of the same phase are arranged in one winding range C. In this embodiment, in the plurality of winding ranges C arranged on one side in the circumferential direction, the U-phase coil 41U, the V-phase coil 41V, and the W-phase coil 41W are arranged in this order and then again the U-phase coil 41U, the V-phase coil 41V, and the W-phase coil 41W are arranged in this order. Thus, the plurality of phase coils 41 of the same phase are arranged in three adjacent winding ranges C in the circumferential direction.

The radially inner end of the coil unit 40 of FIG. 1 is located on the radially inside in relation to the end surface facing the radially inside of the plurality of partition units 32b. According to the rotating electric machine 1 of this embodiment, the plurality of partition units 32b are made smaller in the radial direction and the weight of the rotating electric machine 1 can be reduced. Furthermore, the end surfaces facing the radially inside of the plurality of partition units 32b are disposed on the radially inside in relation to the radially inner end of the coil unit 40. In this case, the radially inner end of the stator 30 can be used as the end surfaces of the partition units 32b and the dimension of the air gap G can be easily managed.

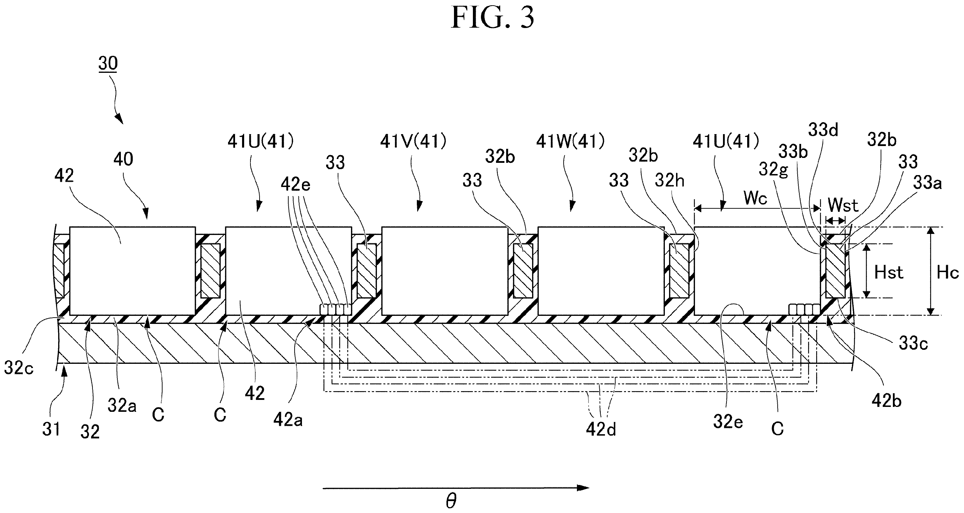

FIG. 3 is a schematic cross-sectional view of the stator 30 of the rotating electric machine 1 according to this embodiment. Furthermore, in FIG. 3, the circumferential direction is represented as a straight line.

As shown in FIG. 3, each of the plurality of phase coils 41 includes a plurality of wire bundles 42. In the stator 30 of the rotating electric machine 1 according to this embodiment, the plurality of wire bundles 42 are arranged in one winding range C. Further, each of the plurality of wire bundles 42 is formed by bundling the plurality of wires 42e. The plurality of wires 42e may be either round wires or square wires, and may have an irregular cross-section. The plurality of wire bundles 42 constitute the plurality of phase coils 41 by winding the wire bundles multiple times in a loop between three adjacent winding ranges C in the circumferential direction. Furthermore, the number of wire bundles 42 arranged in the winding range C can be arbitrarily changed depending on the coil design.

In this embodiment, the radially inner region of the back yoke 31 is partitioned into the plurality of winding ranges C by the partition units 32b. According to the rotating electric machine 1 of this embodiment, it is possible to easily position each phase coil 41 of the coil unit 40 in the circumferential direction and to simplify the assembly process of the stator 30. Further, the plurality of partition units 32b suppress the displacement of the coil unit 40 in the circumferential direction due to magnetic force applied to the coil unit 40 when the rotating electric machine 1 is driven. Additionally, in this embodiment, the plurality of partition units 32b are disposed between the phase coils 41 of different phases to insulate the phase coils 41 of different phases from each other. Accordingly, since electric discharge can be suppressed from occurring between the plurality of phase coils 41 of different phases, a highly reliable rotating electric machine 1 can be configured.

Here, in each of the plurality of wire bundles 42 wound into a loop, a portion disposed in one winding range C is defined as a first portion 42a, and a portion disposed three next to the corresponding winding range C is defined as a second portion 42b. Further, the first portion 42a and the second portion 42b are connected via a transition portion 42d of the wire bundle 42. The transition portion 42d constitute coil ends on one side and the other side in the axial direction of the back yoke 31, respectively. Each of plurality of wire bundles 42 extends in the winding range C from one axial side toward the other axial side in the first portion 42a, extends in the circumferential direction in the transition portion 42d located on the other axial side of the back yoke 31, and extends in the winding range C from the other axial side toward one axial side in the second portion 42b. That is, in the first portion 42a and the second portion 42b, the direction of the current flowing through the wire bundle 42 is opposite in the axial direction.

Each wire 42e is formed by applying an insulating coating such as an enamel coating to a surface of a wire material having excellent conductivity such as a copper alloy. Further, the wire 42e may be a wire made of a superconductor. The plurality of wires 42e constituting one wire bundle 42 are connected in parallel to each other. Furthermore, the number of the wires 42e of the wire bundle 42 can be arbitrarily changed depending on the coil design.

The plurality of wires 42e of each of the plurality of wire bundles 42 of the rotating electric machine 1 according to this embodiment are preferably arranged so that the plurality of wires 42e of the first portion 42a and the plurality of wires 42e of the second portion 42b are arranged to be mirror-symmetrical. Thus, for example, the wire 42e disposed furthest to one circumferential side (+θ) in the first portion 42a is connected to the wire 42e disposed furthest to the other circumferential side (-θ) in the second portion 42b via the transition portion 42d.

Furthermore, "arranged mirror-symmetrically" may refer to that the coil unit 40 is formed by winding the wire bundle 42 such that the arrangement of the wires 42e is reversed in the circumferential direction. Thus, even if the arrangement of the wires 42e is slightly distorted or the shape of each wire bundle 42 is slightly distorted when or after winding the wire bundle 42, this is also included in the mirror-symmetrical arrangement structure.

A conventional stator includes a stator core having a back yoke and a plurality of teeth extending radially inward from the back yoke and a coil unit wound on the teeth. In such a conventional stator, since the magnetic flux generated when the rotating electric machine is driven concentrates on the teeth and flows, the number of magnetic fluxes passing through the coil wires that constitute the coil can be suppressed, and copper loss in the coil unit can be suppressed. However, on the other hand, in the conventional stator, in order to suppress magnetic saturation in the teeth, a sufficient cross-sectional area of the teeth is ensured. Accordingly, the rotating electric machine is large and heavy.

On the other hand, the stator 30 of the rotating electric machine 1 according to this embodiment has a toothless structure (or slotless structure) that does not have teeth. Therefore, according to this embodiment, the weight of the rotating electric machine 1 can be reduced. Further, since the stator 30 of the rotating electric machine 1 according to this embodiment does not have teeth, the winding range C provided on the radially inside of the back yoke 31 can be widely ensured in the circumferential direction. As a result, since the coil unit 40 disposed in the winding range C can be disposed wide in the circumferential direction, the stator 30 can be made smaller in the radial direction while ensuring a sufficient cross-sectional area of the coil unit 40. That is, according to this embodiment, the small and lightweight rotating electric machine 1 can be configured.

In the stator 30 having a toothless structure like the rotating electric machine 1 according to this embodiment, since the magnetic flux passes through the coil unit 40, an electromotive force is generated in the coil unit 40, and copper loss is likely to occur in the coil unit 40. In particular, the rotating electric machine 1 according to this embodiment is used to rotate a propulsion fan 93 of the aircraft 90 or to generate electricity using a jet engine 91 of the aircraft 90. Therefore, it is assumed that the rotating electric machine 1 is used, for example, at a high rotation speed of several thousand rpm or more. In this way, in the rotating electric machine 1 that rotates steadily at high speed, copper loss occurring in the coil unit 40 tends to be significant.

On the other hand, according to the rotating electric machine 1 of this embodiment, the plurality of magnetic body portions 33 are provided between the winding ranges C. Accordingly, since a part of the magnetic flux formed in the radial direction between the rotor 20 and the back yoke 31 can be concentrated on the magnetic body portions 33 when driving the rotating electric machine 1, the number of magnetic fluxes passing through the coil unit 40 can be reduced. Accordingly, the copper loss generated in the coil unit 40 can be reduced. Furthermore, the magnetic body portions 33 of the rotating electric machine 1 according to this embodiment is different from teeth, and the plurality of magnetic body portions 33 are magnetically saturated when the rotating electric machine 1 is driven. This is because the circumferential dimension Wst of the plurality of magnetic body portions 33 of the rotating electric machine 1 according to this embodiment is limited to largely ensure the circumferential dimension Wc of the winding range C. However, even if the magnetic body portions 33 become magnetically saturated during driving, the influence can be maintained within a narrow range when viewed from the rotating electric machine 1 as a whole. Accordingly, a highly efficient rotating electric machine 1 can be configured while taking advantage of the toothless structure.

Since teeth in the conventional structure serve as the main magnetic path of the stator, the torque of the rotating electric machine decreases when they become magnetically saturated. As a result, a decrease in efficiency occurs. On the other hand, the plurality of magnetic body portions 33 of the rotating electric machine 1 according to this embodiment have the main role of reducing the unbalance of the magnetic flux passing through the coil unit 40 and the linkage magnetic flux between different wires, and do not play a main magnetic path. Therefore, in the rotating electric machine 1 of this embodiment, even if the plurality of magnetic body portions 33 are magnetically saturated, the influence on the torque of the rotating electric machine 1 is small, and on the other hand, the copper loss occurring in the coil part 40 is reduced. As a result, the drive efficiency can be improved while maintaining the torque of the rotating electric machine 1.

Copper loss occurring in the coil unit 40 is classified into those due to direct current resistance, those due to proximity effect, and those due to circulating current. Copper loss due to the proximity effect is energy loss caused by eddy current flowing through the wires 42e and released as heat due to changes in magnetic flux density interlinking with each wire 42e of the coil unit 40 over time. In the rotating electric machine 1 according to this embodiment, the rotor 20 is of a surface magnet type and the magnets 25m directly magnetically face the stator 30. Therefore, as the rotor 20 rotates, the magnetic flux density interlinking with the wire 42e tends to change rapidly, and the eddy current flowing on the surface of the wire 42e tends to increase. According to this embodiment, since the plurality of partition units 32b include the plurality of magnetic body portions 33, the number of magnetic fluxes passing through the wire 42e can be suppressed, and copper loss due to the proximity effect can be reduced.

Copper loss due to circulating current is energy loss caused by current flowing between the wires 42e and released as heat due to changes in magnetic flux density interlinking between the plurality of wires 42e included in each of the plurality of wire bundle 42 of the coil unit 40 over time. According to this embodiment, magnetic flux when the rotating electric machine 1 is driven concentrates on the magnetic body portion 33. Accordingly, it is difficult to distribute the number of magnetic fluxes interlinking with different wires 42e between the first portion 42a and the second portion 42b of the wire bundle 42. As a result, since it is difficult to cause a difference in electromotive force between the wires 42e, it is possible to suppress a potential difference between the wires 42e and to suppress circulating current.

As described above, in the wire bundle 42 of the rotating electric machine 1 according to this embodiment, the arrangement of the plurality of wires 42e in the first portion 42a and the arrangement of the plurality of wires 42e in the second portion 42b are mirror-symmetrical. Therefore, it is possible to reduce the change over time in the difference in the number of magnetic fluxes interlinking different wires 42e and further reduce the difference in electromotive force generated between the wires 42e. That is, according to this embodiment, since the arrangement of the wires 42e of the first portion 42a and the arrangement of the wires 42e of the second portion 42b are mirror-symmetrical, copper loss due to circulating current can be further suppressed.

In the stator 30 of the rotating electric machine 1 according to this embodiment, the ratio (Wst/Wc) of the circumferential dimension Wst of the magnetic body portions 33 with respect to the circumferential dimension Wc of the winding range C is preferably less than 1 and more preferably less than 1/2. Furthermore, in the present specification, the term of the "circumferential dimension" means a straight line distance in a direction orthogonal to the radial direction when viewed from the axial direction, and does not mean the arc length extending in the circumferential direction.

Here, the circumferential dimension Wst of each of the plurality of magnetic body portions 33 is the maximum distance dimension between an end 33a on one circumferential side (+θ) and an end 33b on the other circumferential side (-θ) of one of the plurality of magnetic body portion 33. Since the plurality of magnetic body portions 33 of the rotating electric machine 1 according to this embodiment have a rectangular shape when viewed from the axial direction, the circumferential dimension Wst of the plurality of magnetic body portions 33 is constant at any position in the radial direction of the plurality of magnetic body portions 33 in FIG. 3. Further, for example, when the plurality of magnetic body portions have a triangular shape or a trapezoid shape that tapers toward the radially inside when viewed from the axial direction, the circumferential dimension Wst of the plurality of magnetic body portions is the circumferential dimension at the radially outer end of the plurality of magnetic body portions 33. In this way, the circumferential dimension Wst of the plurality of magnetic body portions 33 is made to obtain the maximum distance dimension of the plurality of magnetic body portions 33. Further, the circumferential dimension Wc of the winding range C means the circumferential dimension in the region in which the coil unit 40 between the plurality of partition units 32b can be disposed. Thus, the circumferential dimension Wc of the winding range C means the minimum distance between the surface 32g facing the other circumferential side (-θ) of the partition units 32b disposed on one circumferential side (+θ) and the surface 32h facing one circumferential side (+θ) of the partition units 32b disposed on the other circumferential side (-θ) in the winding range C.

According to the rotating electric machine 1 of this embodiment, since the ratio (Wst/Wc) of the circumferential dimension Wst of the plurality of magnetic body portions 33 with respect to the circumferential dimension Wc of the winding range C is less than 1, the winding range C can be widely ensured in the circumferential direction. Accordingly, since the cross-sectional area of the coil unit 40 is sufficiently ensured, the amount of heat generated can be suppressed even when a large current is passed through the coil unit 40 and hence the torque performance of the rotating electric machine 1 can be improved. Since the winding range C is widely ensured in the circumferential direction, the radial dimension of the coil unit 40 can be reduced while ensuring a sufficient cross-sectional area of the coil unit 40, and the rotating electric machine 1 can be made smaller in the radial direction. Further, according to the rotating electric machine 1 of this embodiment, since the winding range C is widely ensured in the circumferential direction, the exposed range of the coil unit 40 disposed in the winding ranges C toward the radially inside becomes wider. Accordingly, since the coil unit 40 can easily dissipate heat, it is possible to prevent the temperature of the coil unit 40 from rising too high. Furthermore, for the same reason, the ratio (Wst/Wc) of the circumferential dimension Wst of the plurality of magnetic body portions 33 with respect to the circumferential dimension Wc of the winding range C is more preferably less than 1/2.

In the stator 30 of the rotating electric machine 1 according to this embodiment, the ratio (Hst/Hc) of the radial dimension Hst of the plurality of magnetic body portions 33 with respect to the radial dimension Hc of the winding range C is preferably 1/2 or more and more preferably 5/8 or more and 8/9 or less.

Here, the radial dimension Hst of the plurality of magnetic body portions 33 is the maximum distance dimension between a radially inner ends 33c and a radially outer ends 33d of the plurality of magnetic body portions 33. Further, the radial dimension Hc of the winding range C is the maximum distance dimension between the radially inner end and the radially outer end of the winding range C. In this embodiment, the radial dimension Hc of the winding range C is the radial distance dimension from the inner peripheral surface 32e of the annular portion 32a to the radially inner end of the coil unit 40.

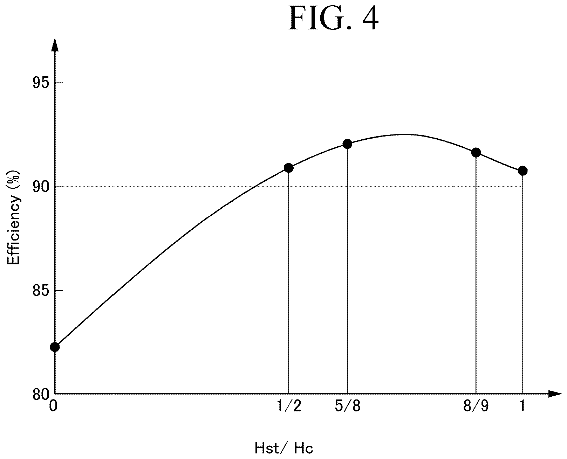

FIG. 4 is a graph showing a simulation result of a relationship between the drive efficiency and the ratio (Hst/Hc) of the radial dimension Hst of the magnetic body portions 33 with respect to the radial dimension Hc of the winding ranges C in the rotating electric machine 1 according to this embodiment. Furthermore, in this simulation, the ratio (Wst/Wc) of the circumferential dimension Wst of the plurality of magnetic body portions 33 with respect to the circumferential dimension Wc of the winding range C was 1/4. Further, the rotation speed of the rotating electric machine 1 was set to 12000 rpm. The drive efficiency was calculated using general-purpose electromagnetic field analysis software JMAG (registered trademark) by taking into account the influence of eddy current flowing through the coil unit 40.

From the simulation result shown in FIG. 4, it was confirmed that the drive efficiency of the rotating electric machine 1 could be 90% or more by setting the ratio (Hst/Hc) of the radial dimension Hst of the magnetic body portions 33 with respect to the radial dimension Hc of the winding range C to be 1/2 or more. Further, when the ratio (Hst/Hc) of the radial dimension Hst of the magnetic body portions 33 with respect to the radial dimension Hc of the winding range C is set to 5/8 or more and 8/9 or less, the drive efficiency can be 92% or more. As a result, the rotating electric machine 1 with high drive efficiency can be configured.

Hereinafter, the configuration and effect of the rotating electric machine 1 according to this embodiment will be summarized below.

The rotating electric machine 1 according to this embodiment includes the rotor 20 and the stator 30. The rotor 20 is rotatable around the center axis J. The stator 30 is disposed on one radial side of the rotor 20 (the radially outside in this embodiment). As shown in FIG. 3, the stator 30 includes the back yoke 31, the coil unit 40, and the plurality of partition units 32b. The back yoke 31 has an annular shape centered on the center axis J. The coil unit 40 is disposed on the other radial side of the back yoke 31 (the radially inside in this embodiment). The plurality of partition units 32b partition the winding range C in which the coil unit 40 is disposed in the circumferential direction. Each of the plurality of partition units 32b includes the magnetic body portion 33 made of a magnetic material. The ratio (Wst/Wc) of the circumferential dimension Wst of the magnetic body portion 33 with respect to the circumferential dimension Wc of the winding range C is less than 1 (Wst/Wc<1). The ratio (Hst/Hc) of the radial dimension Hst of the magnetic body portion 33 with respect to the radial dimension Hc of the winding range C is 1/2 or more (Hst/Hc≥1/2).

According to this configuration, since the stator 30 includes the plurality of partition units 32b, the displacement of the coil unit 40 in the circumferential direction can be suppressed. Further, since each of the plurality of partition unit 32b includes the magnetic body portion 33, the magnetic flux formed between the rotor 20 and the back yoke 31 in the radial direction can be concentrated on the magnetic body portion 33 when driving the rotating electric machine and hence copper loss generated in the coil unit 40 can be suppressed. Further, since the ratio (Wst/Wc) of the circumferential dimension Wst of the magnetic body portion 33 with respect to the circumferential dimension Wc of the winding range C is less than 1, the winding range C can be widely ensured in the circumferential direction. Accordingly, the radial dimension of the coil unit 40 can be reduced while ensuring a sufficient cross-sectional area of the coil unit 40 and the rotating electric machine 1 can be made smaller in the radial direction. Additionally, since the ratio (Hst/Hc) of the radial dimension Hst of the magnetic body portion 33 with respect to the radial dimension Hc of the winding range C is 1/2 or more, the drive efficiency of the rotating electric machine 1 can be 90% or more as shown in FIG. 4.

Further, in the rotating electric machine 1 according to this embodiment, the ratio (Wst/Wc) of the circumferential dimension Wst of the magnetic body portion 33 with respect to the circumferential dimension Wc of the winding range C is less than 1/2 (Wst/Wc<1/2). According to this configuration, the winding range C can be ensured further widely in the circumferential direction and the rotating electric machine 1 can be made further smaller in the radial direction.

Further, in the rotating electric machine 1 according to this embodiment, the ratio (Hst/Hc) of the radial dimension Hst of the magnetic body portion 33 with respect to the radial dimension Hc of the winding range C is 5/8 or more and 8/9 or less. According to this configuration, as shown in FIG. 4, the drive efficiency of the rotating electric machine 1 can be further improved.

Further, in the rotating electric machine 1 according to this embodiment, the circumferential dimension Wc of the winding range C is equal to or less than the radial dimension Hc of the winding range C. According to this configuration, the coil unit 40 disposed in the winding range C can be made thinner in the radial direction. As a result, the rotating electric machine 1 can be made smaller in the radial direction.

Further, in the rotating electric machine 1 according to this embodiment, the coil unit 40 includes the plurality of wire bundles 42 of the plurality of wires 42e connected in parallel to each other. The plurality of wire bundles 42 each include the first portion 42a which extends from one axial side toward the other axial side and the second portion 42b which extends from the other axial side toward one axial side. The arrangement of the plurality of wires 42e in the first portion 42a and the arrangement of the plurality of wires 42e in the second portion 42b are mirror-symmetrical. According to this configuration, the difference in electromotive force generated between the wires 42e can be further reduced. Therefore, it is possible to suppress the circulating current from flowing between the wires 42e that are connected in parallel to each other and to suppress copper loss in the rotating electric machine 1 caused by the circulating current.

Further, in the rotating electric machine 1 according to this embodiment, the rotor 20 is of a surface magnet type. That is, the rotating electric machine 1 according to this embodiment is a surface permanent magnet motor (SPM). Therefore, since the magnet 25m of the rotor 20 magnetically and directly faces the stator 30, the magnetic force of the magnet 25m can be efficiently used and hence the rotating electric machine 1 with high torque performance can be configured. On the other hand, in the rotating electric machine 1 that also uses the surface magnet type rotor 20, there is a problem that copper loss in the stator 30 tends to become significant. However, in the rotating electric machine 1 according to this embodiment, since the copper loss is suppressed as described above, the rotating electric machine 1 with high efficiency and excellent torque performance can be configured in this embodiment.

Further, in the rotating electric machine 1 according to this embodiment, the rotor 20 includes the plurality of magnets 25m of which magnetization directions alternate in the circumferential direction. As shown in FIG. 2, the plurality of magnet 25m are the plurality of divided magnets. According to this configuration, the eddy current loss generated in the plurality of magnets 25m can be reduced. Further, in the rotating electric machine 1 according to this embodiment, the plurality of magnets 25m are the samarium cobalt magnet. According to this configuration, it is possible to configure the rotating electric machine 1 that exhibits sufficient torque performance even at high temperatures by adopting the samarium cobalt magnet with excellent heat resistance as the plurality of magnets 25m.

### (Second embodiment)

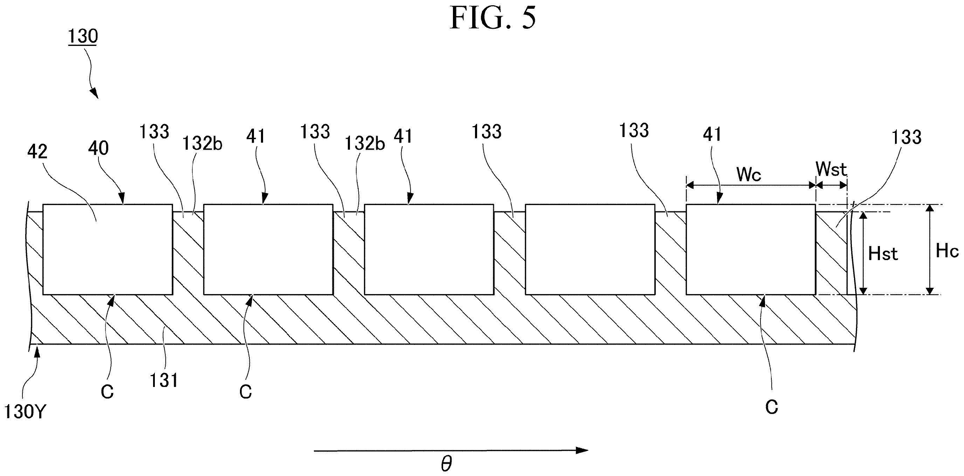

FIG. 5 is a schematic cross-sectional view of a stator 130 of a second embodiment. Furthermore, in FIG. 5, the circumferential direction is represented as a straight line. The stator 130 according to this embodiment differs from the above-described embodiment mainly in the structure of each of a plurality of partition units 132b. Furthermore, components having the same aspects as those in the above-described embodiment are given the same reference numerals, and their descriptions will be omitted.

The stator 130 according to this embodiment includes a back yoke 131, the plurality of partition units 132b, the coil unit 40, and an insulating paper (not shown). In this embodiment, the back yoke 131 and the plurality of partition units 132b are composed of a single yoke member 130Y That is, the stator 130 includes the yoke member 130Y Further, the yoke member 130Y includes the annular back yoke 131 and the plurality of partition units 132b which protrude radially inward from the inner peripheral surface of the back yoke 131. The yoke member 130Y is made of a magnetic material, and is, for example, a laminated steel plate formed by laminating a plurality of electromagnetic steel plates in the axial direction. That is, the back yoke 131 and the partition units 132b are made of a magnetic material. Thus, the plurality of partition units 132b of the stator 130 according to this embodiment are entirely a plurality of magnetic body portions 133 made of a magnetic material.

The plurality of partition units 132b partition the winding range C in which the coil unit 40 is disposed. An insulating paper (not shown) is disposed between the coil unit 40 and the yoke member 130Y The insulating paper insulates the coil unit 40 and the yoke member 130Y from each other.

In the stator 130 according to this embodiment, as in the first embodiment, the ratio (Wst/Wc) of the circumferential dimension Wst of the plurality of magnetic body portions 133 (that is, the partition unit 132b) with respect to the circumferential dimension Wc of the winding range C is less than 1. Therefore, the winding range C can be widely ensured in the circumferential direction and the radial dimension of the coil unit 40 can be reduced while sufficiently ensuring the cross-sectional area of the coil unit 40. Further, in the stator 130 according to this embodiment, when the ratio (Wst/Wc) is less than 1/2 (Wst/Wc<1/2), the winding range C can be further widely ensured in the circumferential direction and the rotating electric machine 1 can be made further smaller in the radial direction.

In the stator 130 according to this embodiment, as in the first embodiment, the ratio (Hst/Hc) of the radial dimension Hst of the plurality of magnetic body portions 133 with respect to the radial dimension Hc of the winding range C is 1/2 or more. Therefore, as shown in FIG. 4, the drive efficiency of the rotating electric machine 1 can be 90% or more. Further, in the stator 130 according to this embodiment, when the ratio (Hst/Hc) is 5/8 or more and 8/9 or less, the drive efficiency of the rotating electric machine 1 can be further improved.

In the stator 130 according to this embodiment, as in the first embodiment, the circumferential dimension Wc of the winding range C is equal to or less than the radial dimension Hc of the winding range C. Therefore, the coil unit 40 disposed in the winding range C can be made thinner in the radial direction. As a result, the rotating electric machine 1 can be made smaller in the radial direction.

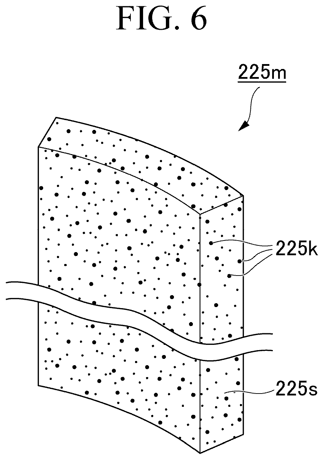

Next, a magnet 225m of a modified example that can be adopted in each of the above-described embodiments will be described. FIG. 6 is a perspective view of the magnet 225m of the modified example. The magnet 225m of the modified example is a bonded magnet. Thus, the magnet 225m of the modified example is manufactured by mixing magnet powder 225k with binder 225s such as plastic or rubber, solidifying and molding the mixture, and then magnetizing the mixture. Since the magnet 225m is the bonded magnet, the magnet powder 225k is insulated from each other by the binder 225s and hence eddy current is less likely to occur in the magnet 225m. By adopting the magnet 225m of the modified example in each of the rotors 20 of the above-described embodiments, it is possible to further reduce the eddy current loss that may occur within the magnet 225m.

According to at least one of the above-described embodiments, since the stator 30 includes the magnetic body portions 33 and 133 and the winding ranges C that satisfy the above-described ranges as the circumferential dimension and the radial dimension, it is possible to provide the rotating electric machine 1 with excellent energy efficiency by ensuring a sufficiently wide winding range C to reduce the size and weight while concentrating magnetic flux on the magnetic body portion 33 and suppressing copper loss.

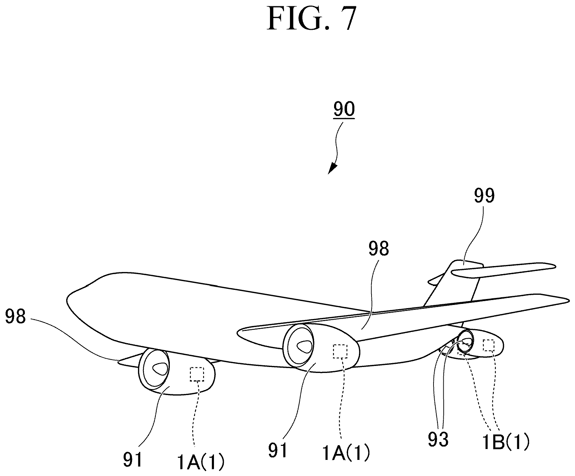

The above-described rotating electric machine can be mounted on various driving objects such as automobiles, railways, and aircraft. FIG. 7 is a schematic view of the aircraft 90 as an example of a driving object on which the rotating electric machine 1 is mounted. The aircraft 90 is a hybrid aircraft that is propelled by a combination of the jet engine 91 and the rotating electric machine 1. The aircraft 90 includes the pair of jet engines 91 and four rotating electric machines 1. The jet engine 91 is provided in a main wing 98. The jet engine 91 generates thrust by exhausting the air backward.

Four rotating electric machines 1 are classified into two power generating rotating electric machines 1A and two driving rotating electric machines 1B. Each power generating rotating electric machine 1A is connected to a main shaft of the jet engine 91. The power generating rotating electric machine 1A generates power by the jet engine 91. On the other hand, the driving rotating electric machine 1B is disposed below a vertical tail 99. The driving rotating electric machine 1B sends air backward and generates thrust by rotating the propulsion fan 93. The driving rotating electric machine 1B is driven by the power generated by the power generating rotating electric machine 1A. Furthermore, when the power generating rotating electric machine 1A generates surplus power, this power may be charged into a battery and used when necessary.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A rotating electric machine comprising:
a rotor which is rotatable around a center axis;
a stator which is disposed on one radial side of the rotor,
wherein the stator comprises:
an annular back yoke centered on the center axis;
a coil unit disposed on the other radial side of the back yoke; and
a partition unit partitioning a winding range in which the coil unit is
disposed in a circumferential direction,
wherein the partition unit includes a magnetic body portion of a magnetic material,
wherein a ratio of a circumferential dimension of the magnetic body portion with respect to a circumferential dimension of the winding range is less than 1, and
wherein a ratio of a radial dimension of the magnetic body portion with respect to a radial dimension of the winding range is 1/2 or more.

2. The rotating electric machine according to claim 1,
wherein the ratio of the circumferential dimension of the magnetic body portion with respect to the circumferential dimension of the winding range is less than 1/2.

3. The rotating electric machine according to claim 1,
wherein the ratio of the radial dimension of the magnetic body portion with respect to the radial dimension of the winding range is 5/8 or more and 8/9 or less.

4. The rotating electric machine according to claim 1,
wherein the circumferential dimension of the winding range is equal to or less than the radial dimension of the winding range.

5. The rotating electric machine according to claim 1,
wherein the coil unit comprises a wire bundle of a plurality of wires connected in parallel to each other,
wherein the wire bundle comprises a first portion extending from one axial side toward the other axial side and a second portion extending from the other axial side toward one axial side, and
wherein the arrangement of the plurality of wires in the first portion and the arrangement of the plurality of wires in the second portion are mirror-symmetrical to each other.

6. The rotating electric machine according to claim 1,
wherein the rotor is of a surface magnet type.

7. The rotating electric machine according to claim 1,
wherein the rotor comprises a plurality of magnets of which magnetization directions alternate in the circumferential direction, and
wherein the plurality of magnets are a plurality of divided magnets.

8. The rotating electric machine according to claim 1,
wherein the rotor comprises a plurality of magnets of which magnetization directions alternate in the circumferential direction, and
wherein the plurality of magnets are a plurality of samarium cobalt magnets.

9. The rotating electric machine according to claim 1,
wherein the rotor comprises a plurality of magnets of which magnetization directions alternate in the circumferential direction, and
wherein the plurality of magnets are a plurality of bonded magnets.
